# EUROPÄISCHE PATENTSCHRIFT

(11) **EP 1 985 498 B1**
(45) Veröffentlichungstag und Bekanntmachung des Hinweises auf die Patenterteilung: **16.05.2012**
(21) Anmeldenummer: 08005242.6
(22) Anmeldetag: 20.03.2008
(51) Int. Cl.: B60R 9/04

(54) **Dachlastträgersystem**
Roof load carrier system
Système de support d'une charge de toit

(30) Priorität: 24.04.2007 DE 102007019617
(43) Veröffentlichungstag der Anmeldung: 29.10.2008
(73) Patentinhaber: JAC Products Europe GmbH, 42285 Wuppertal (DE)
(72) Erfinder: Evels, Brigitte, 42119 Wuppertal (DE)
(74) Vertreter: Christophersen, Ulrich Rudolf

(56) Entgegenhaltungen:
- EP-A2- 0 806 321
- WO-A2-2006/032474
- DE-C1- 4 422 421
- DE-C1- 4 441 802
- DE-U1-202004 017 967

## Beschreibung

Die Erfindung betrifft ein Dachlastträgersystem für die Montage auf dem Dach eines Fahrzeuges nach dem Oberbegriff des Patentanspruchs 1.

Vormontierte, d. h. von Seiten des Fahrzeugherstellers auf dem Fahrzeugdach befestigte Dachlastträgersysteme sind einerseits als Dachrelings bekannt, die aus Galeriestäben und Endstützen, ggf. auch Mittelstützen bestehen und mittels der Endstützen bzw. der Mittelstützen mit dem Fahrzeugdach verschraubt sind. An den Galeriestäben lassen sich bei Bedarf Querstäbe befestigen, auf die sich Dachlasten laden lassen. Andererseits sind vor allem aus jüngerer Zeit Dachlastträgersysteme bekannt, die aus direkt auf dem Fahrzeugdach angeordneten Dachleistenprofilen bestehen.

Während bisher bei einer Dachreling der Gebrauchswert im Vordergrund stand, gewinnt jetzt der so genannte optische Nutzwert zunehmend an Bedeutung. Dies bedeutet, dass sich die klassische Dachreling in ihrem Erscheinungsbild verändert und beispielsweise weniger hoch baut. Solche Dachlastträgersysteme, bei denen der eigentliche Galeriestab in Form einer durchgehenden Leiste ohne End- und Mittelstützen ausgebildet ist, sind z. B. aus der DE 10 2005 018 158 A1 und der DE 10 2005 017 761 B3 bekannt. Der eigentliche Galeriestab sitzt im Bereich seiner Enden auf dem Fahrzeugdach auf bzw. taucht in den im Fahrzeugdach ausgeformten Dachkanal ein. Auf die Endstützen und die Mittelstütze, die das Bild der klassischen Kfz-Dachreling prägen, wird verzichtet, und störende Trennlinien und Übergänge entfallen. Schwierig ist jedoch die Anbindung der Befestigungselemente zur Verbindung mit dem Fahrzeugdach in den Endbereichen des Galeriestabs.

Ein gattungsbildendes Dachlastträgersystem, bei dem das Dachleistenprofil aus einem Hohlprofil mit über dessen Länge gleichbleibender Querschnittskontur besteht, dessen Endbereiche unten angeschrägt gestaltet sind, ist aus der DE 44 22 421 C1 bekannt. Zur Befestigung auf dem Fahrzeugdach ist in den Endbereich des Hohlprofils eine aus zwei getrennten Blechen zusammengesetzte Befestigungsanordnung einschiebbar. Das eine Blech befindet sich dann innen in dem Hohlprofil, das andere Blech außen, wobei es das Dachleistenprofil auf dem Fahrzeugdach abstützt. Die zwei Bleche sind an mehreren Stellen miteinander verschraubt, wobei zwei dieser Verschraubungen zugleich Bohrungen in der unteren Fläche des Hohlprofils durchdringen, so dass beim Anziehen der Verschraubungen die untere Fläche des Hohlprofils zwischen den zwei Blechen eingespannt wird. Anschließend erfolgt noch eine Verschraubung des unteren Blechs mit der Fahrzeugkarosserie. Die Befestigungsanordnung nach der DE 44 22 421 C1 ist zwar in der Herstellung preiswert, jedoch ist die Montage des Dachlastträgersystems auf dem Dach eines Fahrzeugs wegen der Anzahl der erforderlichen Einzelteile nicht einfach.

Der Erfindung liegt die **Aufgabe** zugrunde, ein optisch ansprechendes Dachlastträgersystem zu schaffen, das sich aus preiswert herstellbaren Bauteilen einfach montieren lässt.

Ausgehend von dieser Aufgabenstellung wird ein Dachlastträgersystem mit den Merkmalen des Patentanspruchs 1 vorgeschlagen.

Dabei ist das Dachleistenprofil ein geschlossenes Hohlprofil, und das Befestigungselement ist als eine eine untere Fläche des Hohlprofils untergreifende, zweischenklige Klammer mit einem Gewindedurchzug im oberen Schenkel und einer Bohrung im unteren Schenkel für einen in den Gewindedurchzug einschraubbaren, eine Bohrung in der unteren Fläche durchgreifenden Befestigungsbolzen ausgebildet. In den unteren Schenkel der Klammer ist eine Vertiefung im Bereich der Bohrung zur versenkten Aufnahme eines Bundes des Befestigungsbolzens und/oder einer Dichtung eingeformt.

Mit einer Ausgestaltung wird vorgeschlagen, dass die untere Fläche im Vergleich zur oberen, nach fahrzeugaußen gerichteten Fläche in Profillängsrichtung verkürzt ist, und dass die Klammer um das verkürzte Ende der unteren Fläche herum angeordnet ist.

Dadurch, dass die in die Endbereiche des Dachleistenprofils eingeschobenen Befestigungselemente mit dem Fahrzeugdach verschraubt werden, ist das Dachleistenprofil unverrückbar mit dem Fahrzeugdach verbunden, ohne dass die Befestigungselemente zwingend formflüssig mit dem Dachleistenprofil verbunden sein müssen.

Insbesondere, wenn das Dachleistenprofil eine stärkere Krümmung als das Fahrzeugdach oder der Dachkanal aufweist und an den Endbereichen dem Verlauf des Fahrzeugsdachs oder des Dachkanals angepasst abgeschrägt bearbeitet ist und in diesen Bereichen die Befestigungselemente eingesetzt und mit dem Fahrzeugdach oder dem Dachkanal verschraubt sind, liegt das Dachleistenprofil auch nur mit den abgeschrägt bearbeiteten Endbereichen auf dem Fahrzeugdach oder dem Dachkanal auf. Hingegen weist der zwischen den Endbereichen liegende Bereich des Dachleistenprofils einen Abstand vom Fahrzeugdach oder dem Dachkanal auf, so dass eine auf das Dachlastträgersystem aufgelegte Dachlast dazu führt, dass die Verbindung zwischen den Dachleistenprofilen und den Befestigungselementen umso fester wird, je größer die Dachlast ist. In diesem Fall ist es auch möglich, die Befestigungselemente mit dem Fahrzeugdach oder dem Dachkanal mit einer durch die Krümmung des Dachleistenprofils erzeugbaren Vorspannung zu verschrauben.

Für das Dachleistenprofil lässt sich ein Strangpressprofil verwenden, also ein Profil mit über seiner Länge gleich bleibender Querschnittskontur. Ein solches Profil ist, da aus einem Endlosprofil produziert, besonders preiswert. Zur Anpassung an die Krümmung des Fahrzeugdachs bzw. des Dachkanals ist es ausreichend, wenn der Endbereich des Strangpressprofils entsprechend unten angeschrägt bearbeitet ist, was sich herstellungstechnisch preiswert realisieren lässt.

Vorzugsweise weist das Dachleistenprofil eine stärkere Krümmung in Längsrichtung als das Fachzeugdach bzw. der Dachkanal auf, und ist an seinem Endbereich dem Verlauf des Fahrzeugsdachs bzw. Dachkanals entsprechend angeschrägt. Bei der Montage des Dachlastträgersystems wird in den jeweiligen Endbereich des Dachleistenprofils bzw. Strangpressprofils das Befestigungselement eingesetzt und mit dem Fahrzeugdach bzw. Dachkanal verbunden.

Vorzugsweise erfolgt das Einsetzen des Befestigungselements, indem dieses in Profillängsrichtung in den Endbereich eingeschoben wird.

Vorzugsweise weist das Dachleistenprofil in auf dem Fahrzeugdach bzw. Dachkanal befestigtem Zustand Enden auf, die in Profillängsrichtung gesehen offen geformt sind, wobei jedes offene Ende in Profillängsrichtung durch einen Stopfen verschlossen ist. Auf diese Weise können Schmutz und Staub nicht über die Enden in das Dachleistenprofil gelangen.

Alle Ausführungsformen des Dachleistenprofils können vorzugsweise als Strangpressprofile aus Metall oder Kunststoff ausgebildet sein.

Insbesondere, wenn das Dachlastträgersystem direkt auf einem Fahrzeugdach befestigt wird, ist es vorteilhaft, wenn separate Kappen an den Endbereichen des Dachleistenprofils für einen ästhetisch ansprechenden Übergang des Dachleistenprofils zum Fahrzeugdach bzw. Dachkanal ansetzbar sind oder einstückig mit den Befestigungselementen geformt sind.

Die Erfindung wird nachstehend anhand eines Ausführungsbeispiels näher erläutert. In der Zeichnung zeigen:
- Fig. 1: eine schematische, perspektivische Ansicht eines Fahrzeugdachs mit darauf angeordnetem Dachlastträgersystem,
- Fig. 2: eine auseinander gezogene, perspektivische Darstellung eines Endbereichs eines Dachleistenprofils und eines Befestigungselements,
- Fig. 3: einen Querschnitt durch den Endbereich des Dachleistenprofils mit eingesetztem Befestigungselement gemäß Fig. 2,
- Fig. 4: ein erfindungsgemäßes Dachlastträgersystem im Querschnitt,
- Fig. 5: einen Längsschnitt nur eines Endbereichs des erfindungsgemäßen Dachlastträgersystems gemäß Fig. 4,
- Fig. 6: ein Dachlastträgersystem in einer perspektivischen, auseinander gezogenen Darstellung,
- Fig. 7: einen Querschnitt durch das Dachlastträgersystem gemäß Fig. 6 im Bereich des eingesetzten Befestigungselements,
- Fig.8: ein Dachlastträgersystem in einer perspektivischen, auseinander gezogenen Darstellung und
- Fig. 9: einen Längsschnitt durch das Dachlastträgersystem gemäß Fig. 8 im Bereich des eingeschobenen Befestigungselements.

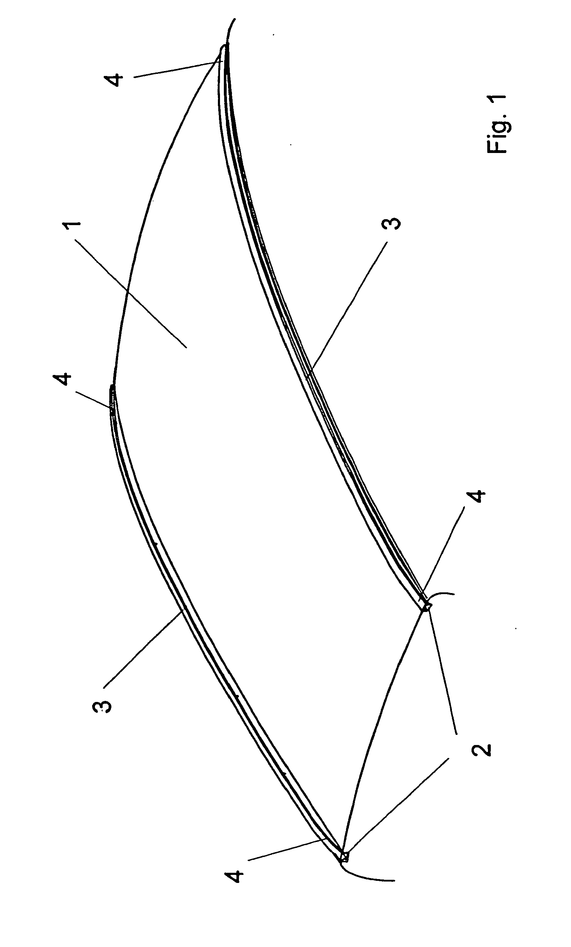

Das in Fig. 1 allgemein dargestellte Dachlastträgersystem besteht aus einem in einem abgesenkten Dachkanal 2 eines Fahrzeugdachs 1 angeordneten U-förmigen Dachleistenprofil 3, das an den Endbereichen 4 im Dachkanal 2 befestigt ist.

Die Dachleistenprofile 3 verlaufen längs der Dachkanäle 2 des Fahrzeugdachs 1 und weisen in Längsrichtung eine Krümmung auf, die stärker ist als die Krümmung des Fahrzeugdachs 1 und des Dachkanals 2, so dass die Dachleistenprofile 3 nur mit ihren Endbereichen 4 in den Dachkanälen 2 aufliegen. Das Dachleistenprofil ist ein Strangpressprofil mit über seiner Länge gleich bleibender Querschnittskontur. Um ein bündiges Aufliegen auf dem Boden des Dachkanals zu gewährleisten, sind die Endbereiche 4 entsprechend dem Verlauf des Dachkanals 2 unten abgeschrägt bearbeitet. Hierzu sind die beiden vertikalen Seitenschenkel 7, 9 des Profils unten schräg abgeschnitten.

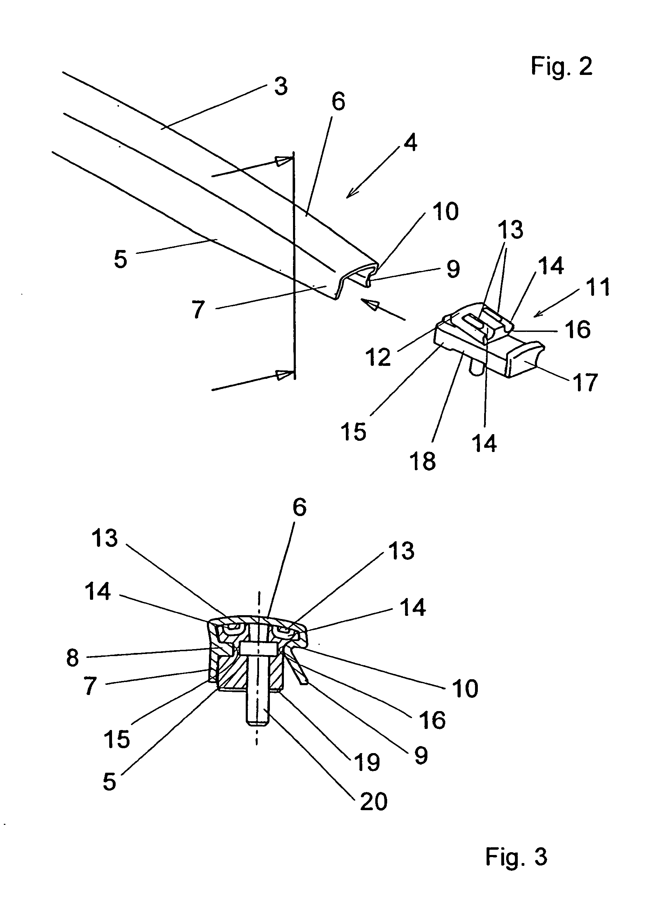

Das U-förmige Dachleistenprofil 3 nach den Fign. 2 und 3 besteht aus einer oberen Fläche 6, dem ersten Seitenschenkel 7 mit einem daran angeformten, nach innen ragendem Steg 8 und dem zweiten Seitenschenkel 9. Dieser ist so gestaltet, dass er auf seiner Außenseite eine Sicke 10 aufweist, und entsprechend in das Profilinnere ein Vorsprung hineinragt.

Ein Befestigungselement 11, das aus Kunststoff oder Metall bestehen kann, weist an seiner Oberseite 12 in Ausnehmungen 14 angeordnete Hakennasen 13 auf. Des Weiteren weist das Befestigungselement 11 zum Steg 8 und zur Sicke 10 bzw. Ausbauchung kongruente Ausnehmungen 15, 16 auf, die als Nut bzw. als Hinterschneidung ausgebildet sind. Eine Abschlussfläche 17 verschließt die Öffnung im Endbereich 4 des Dachleistenprofils 3, wenn das Befestigungselement 11 in das Dachleistenprofil 3 längs eingeschoben ist. Die Hakennasen 13 klemmen das Befestigungselement 11 im Dachleistenprofil 3 fest und gewährleisten einen klapperfreien Sitz und Toleranzausgleich.

Am Befestigungselement 11 ist ein nach unten ragender Gewindestift 20 angeordnet, mit dem das Dachlastträgersystem auf dem Boden des Dachkanals 2 des Fahrzeugdachs 1 verschraubt wird. Um den Gewindestift 20 herum ist unten am Befestigungselement 11 eine Ausnehmung 18 (Fig. 2) vorgesehen, in die sich eine Dichtung 19 einlegen lässt.

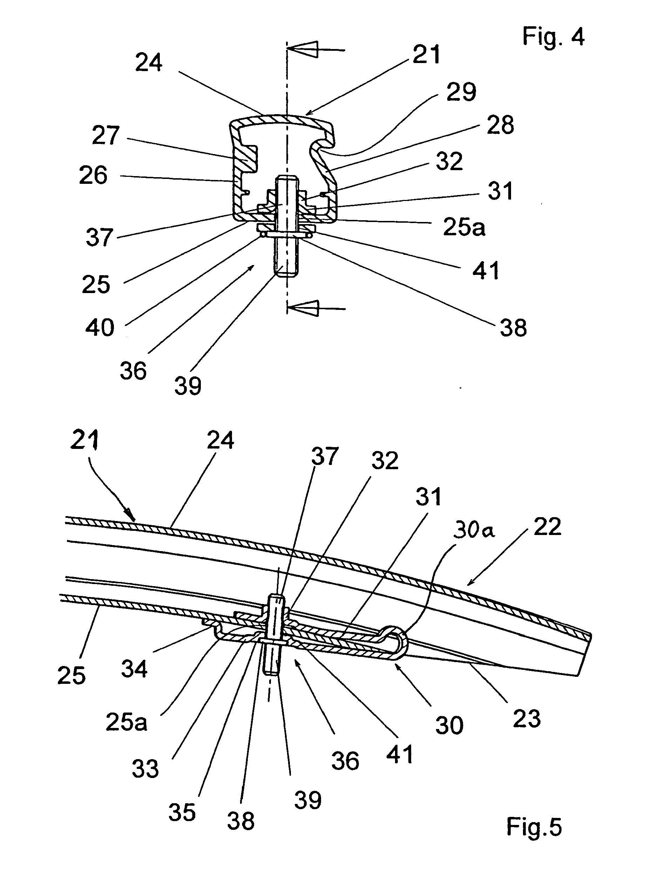

Das erfindungsgemäß ausgebildete Dachleistenprofil gemäß Fig. 4 und 5 ist als Hohlprofil ausgebildet und wiederum am Endbereich 22 unten abgeschrägt gemäß Schräge 23. Dieses Dachleistenprofil 21 weist eine obere Fläche 24 und eine untere Fläche 25 mit einer Bohrung 25a auf, während eine Seite 26 mit einem ins Profilinnere gerichteten Steg 27 und eine andere Seite 28 wiederum mit einer Sicke 29 versehen sind. In Längsrichtung des Dachleistenprofils 21 betrachtet endet, bedingt durch die Schräge 23, die untere Profilfläche 25 vor der oberen Profilfläche 24. Als Befestigungselement dient eine Klammer 30 aus zwei in Profilrichtung verlaufenden Schenkeln 31, 33, die bei 30a außerhalb des Endes der unteren Profilfläche 25 miteinander verbunden sind. Der obere Schenkel 31 übergreift die untere Fläche 25 des Dachleistenprofils 21 und ist in geeigneter Weise an die Innenkontur des Dachleistenprofils 21 angepasst. Hingegen untergreift der untere Schenkel 33 diese untere Fläche 25. Der untere Schenkel 33 stützt sich mittels einer an seinem freien Ende angeordneten Abwinkelung 34 gegen die untere Fläche 25 ab.

Der obere Schenkel 31 ist mit einem Gewindedurchzug 32 versehen, in den sich ein Bundbolzen 36 mit seinem oberen Gewindeteil 37 einschrauben lässt. Dieser Bundbolzen 36 durchgreift die Bohrung 25a in der unteren Fläche 25 des Dachleistenprofils 21 sowie eine Bohrung 41 im unteren Schenkel 33 und stützt sich mittels eines Bundes 38 in einer Vertiefung 35 des unteren Schenkels 33 ab. Durch den Bundbolzen 36 werden der untere Schenkel 33, die untere Fläche 25 des Dachleistenprofils 21 und der obere Schenkel 31 der spangenförmigen Klammer 30 gegeneinander verspannt. In die Vertiefung 35 lässt sich eine Dichtung 40 einlegen, um eine Abdichtung gegenüber dem Fahrzeugdach 1 bzw. dem Dachkanal 2 zu gewährleisten.

Das freie Ende des Dachleistenprofils 21 lässt sich durch eine nicht dargestellte Kappe in optisch ansprechender Weise verschließen.

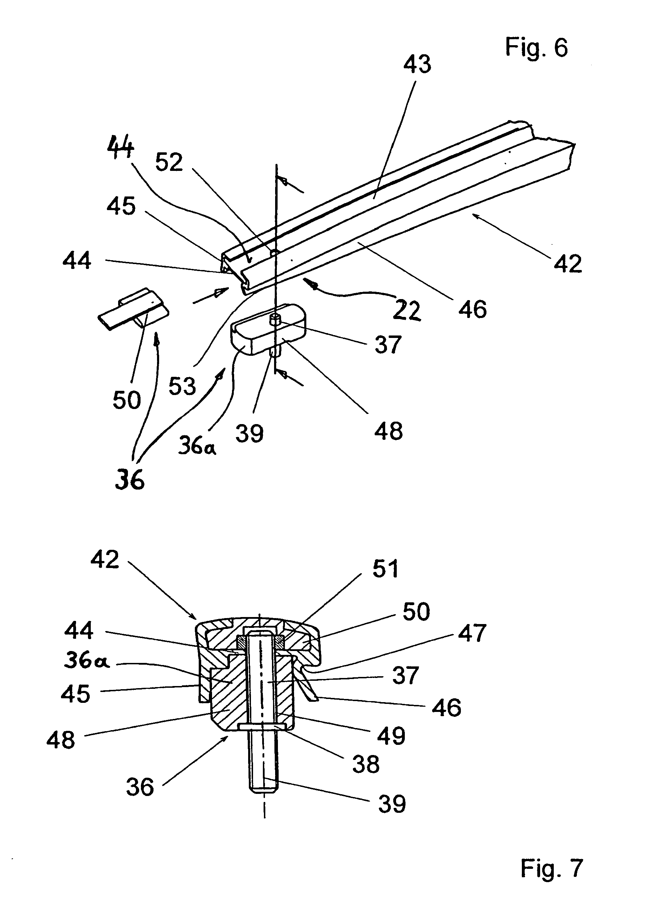

Die in Fig. 6 bis 9 dargestellten Dachlastträgersysteme weisen in den Dachleistenprofilen nach oben geöffnete T-Nuten 43 auf, in die sich Befestigungselemente für Querträger einsetzen lassen.

Das Dachleistenprofil gemäß Fig. 6 und 7 ist ein nach oben und nach unten offenes Profil mit einer ersten Seitenwand 45 und einer zweiten Seitenwand 46 mit einer Sicke 47. Ein horizontaler Verbindungssteg 44 auf mittlerer Höhe verbindet die beiden Seitenwände 45, 46. Ein Grundelement 36a des zweiteiligen Befestigungselements 36 wird in den unten abgeschrägt 53 gestalteten Endbereich 22 des Dachleistenprofils 42 eingeschoben, ebenso ein Zusatzelement in Form eines oberen Einlegeteils 50. Dieses ist entsprechend der Innenkontur der T-Nut profiliert und in diese längs eingeschoben. Ein Bundbolzen wird mit seinem oberen Gewindeteil 37 durch eine Bohrung 49 im Grundelement 36a und durch eine Bohrung 52 im Verbindungssteg 44 des Dachleistenprofils 42 hindurch gesteckt und in einen Gewindeeinsatz 51 im Einlegeteil 50 eingeschraubt. Das Einlegeteil 50, das Dachleistenprofil 42 und das Grundelement 36a sind also formschlüssig miteinander verspannt und das so gebildete Dachlastträgersystem lässt sich mit dem Fahrzeugdach 1 bzw. im Dachkanal 2 des Fahrzeugdachs 1 mittels des unteren Gewindeteils 39 verschrauben.

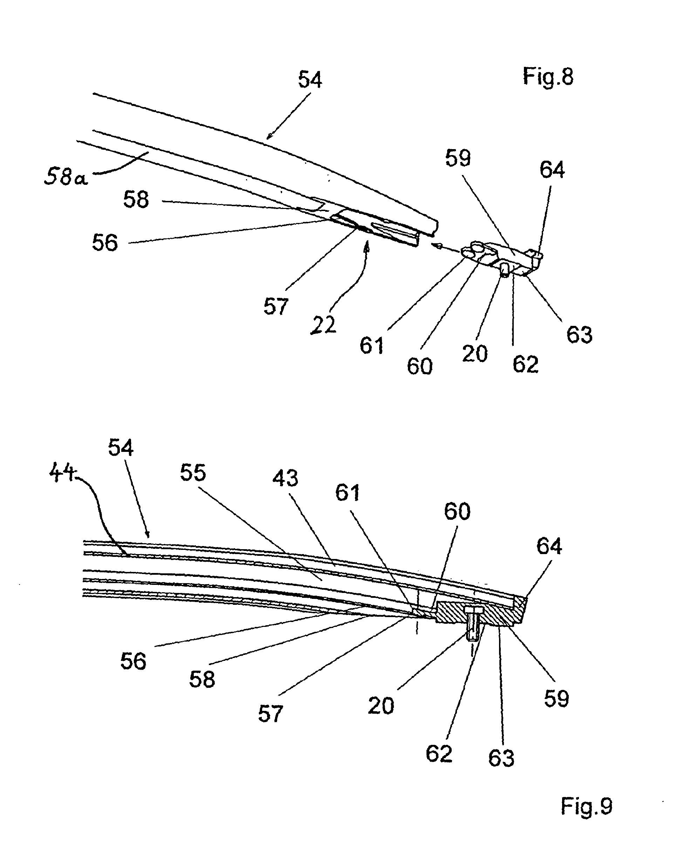

Das Dachlastträgersystem gemäß Fig. 8 und 9 weist ebenfalls auf der Oberseite des Dachleistenprofils 54 eine nach oben offene T-Nut 43 auf, ist jedoch in seinem unteren Querschnitt, d. h. unterhalb des horizontalen Verbindungsstegs 44, als Hohlkammerprofil ausgebildet. Der Endbereich des Dachleistenprofils 54 ist, wie hinsichtlich der anderen Dachleistenprofile bereits beschrieben, unten abgeschrägt 58 bearbeitet, so dass in Profillängsrichtung betrachtet die untere Wand 58a des Profils 54 kürzer als das Profil selbst ist, und kürzer als der Verbindungssteg 44. Zwischen der unteren Wand 58a und dem Verbindungssteg 44 befindet sich eine Hohlkammer 55, in die seitlich Stege 56 ragen. Die Stege 56 sind mit Ausklinkungen 57 versehen, in die Rastnoppen 61 an einer Lasche 60 eines Befestigungselements 59 einrasten können. Das Befestigungselement 59 ist auf diese Weise formschlüssig mit dem Dachleistenprofil 54 verbunden und schließt die T-Nut 43 mittels eines Fortsatzes 64 ab.

Das Befestigungselement 59 ist mit einem Gewindestift 20 zur Befestigung am Fahrzeugdach 1 versehen. Im Bereich des Gewindestifts 20 weist die Unterseite 63 des Befestigungselements 59 eine Ausnehmung 62 zum Einlegen einer Dichtung auf.

Die verschiedenen Dachlastträgersysteme zeichnen sich dadurch aus, dass die Dachleistenprofile 3, 21, 42, 54 nur an ihren Endbereichen 4 abgeschrägt 5, 23, 53, 58 bearbeitet sind und nur dort auf dem Fahrzeugdach 1 bzw. in den Dachkanälen 2 unter Zwischenlage von Dichtungen aufliegen und sich durch Einschieben der Befestigungselemente in die Endbereiche und deren anschließendes Verschrauben mit dem Fahrzeugdach 1 bzw. dessen Dachkanälen 2 verbinden lassen, und dort unter Vorspannung spiel- und wackelfrei gehalten werden. Die Befestigungselemente für mit den Dachleistenprofilen 3, 21, 42, 54 zu verbindende Querträger lassen sich entweder gemäß Fig. 2, 3, 4, 5 durch Festklammern in den Sicken 10, 29 oder durch Einsetzen von entsprechend geformten Befestigungselementen in den T-Nuten 43 befestigen.

Die Dachleistenprofile 3, 21, 42, 54 können als Strangpressprofile aus Metall oder Kunststoff hergestellt sein, während die Befestigungselemente 11, 48, 59 und das Einlegeteil aus Kunststoff oder Metall bestehen können. Das als Spange bzw. Klammer 30 ausgebildete Befestigungselement gemäß Fig. 4 und 5 besteht vorzugsweise aus Federstahl.

Je nachdem, ob das Dachlastträgersystem direkt auf einem Fahrzeugdach 1 befestigt ist oder in an den Enden verschlossenen Dachkanälen 2 angeordnet wird, sind die Dachleistenprofile an ihren Endbereichen mit Kappen versehen, die einen Übergang zum Fahrzeugdach 1 oder den Dachkanälen 4 schaffen bzw. sind die Befestigungselemente 11, 48, 50, 59 einstückig mit entsprechenden Kappen versehen.

## Patentansprüche

1. Dachlastträgersystem, bestehend aus einem auf einem Fahrzeugdach (1) oder einem Dachkanal (2) des Fahrzeugdachs (1) zu befestigenden Dachleistenprofil (21), welches ein geschlossenes Hohlprofil ist, und einem der Innenkontur des Dachleistenprofils (21) angepassten, in dessen Endbereich (22) einschiebbaren und mit dem Fahrzeugdach (1) verschraubbaren Befestigungselement (30), **dadurch gekennzeichnet, dass** das Befestigungselement (30) als eine eine untere Fläche (25) des Hohlprofils (21) untergreifende, zweischenklige Klammer (30) mit einem Gewindedurchzug (32) im oberen Schenkel (31) und einer Bohrung (41) im unteren Schenkel (33) für einen in den Gewindezug (32) einschraubbaren, eine Bohrung (25a) in der unteren Fläche (25) durchgreifenden Befestigungsbolzen (36) ausgebildet ist, und dass in dem unteren Schenkel (33) der Klammer (30) eine Vertiefung (35) im Bereich der Bohrung (41) zur versenkten Aufnahme eines Bundes (38) des Befestigungsbolzens (36) und/oder einer Dichtung (40) eingeformt ist.

2. Dachlastträgersystem nach Anspruch 1, **dadurch gekennzeichnet, dass** das Dachleistenprofil (21) aus einem Strangpressprofil mit über dessen Länge gleich bleibender Querschnittskontur besteht, wobei der Endbereich (22) des Strangpressprofils unten angeschrägt bearbeitet ist.

3. Dachlastträgersystem nach Anspruch 1 oder 2, **dadurch gekennzeichnet, dass** das Dachleistenprofil (21) eine stärkere Krümmung in Längsrichtung als das Fahrzeugdach (1) bzw. der Dachkanal (2) aufweist, und an seinem Endbereich (22) dem Verlauf des Fahrzeugdachs (1) bzw. Dachkanals (2) angepasst angeschrägt (23) ist.

4. Dachlastträgersystem nach Anspruch 2 oder 3, **dadurch gekennzeichnet, dass** in den Endbereich (22) das Befestigungselement (30) eingesetzt und mit dem Fahrzeugdach (1) bzw. Dachkanal (2) verbunden ist.

5. Dachlastträgersystem nach Anspruch 4, **dadurch gekennzeichnet, dass** das Befestigungselement (30) durch Einschieben in Profillängsrichtung in den Endbereich (22) eingesetzt ist.

6. Dachtastträgersystem nach einem der vorangehenden Ansprüche, **dadurch gekennzeichnet, dass** das Dachleistenprofil (21) in auf dem Fahrzeugdach (1) bzw. Dachkanal (2) befestigtem Zustand Enden aufweist, die in Profillängsrichtung gesehen offen geformt sind, und dass jedes offene Ende in Profillängsrichtung durch eine Kappe verschlossen ist.

7. Dachlastträgersystem nach Anspruch 1, **dadurch gekennzeichnet, dass** die untere Fläche (25) im Vergleich zur oberen, nach fahrzeugaußen gerichteten Fläche (24) in Profillängsrichtung verkürzt ist, und dass die Klammer (30) um das verkürzte Ende der unteren Fläche (25) herum angeordnet ist.

8. Dachlastträgersystem nach einem der Ansprüche 1 bis 7, **dadurch gekennzeichnet, dass** separate Kappen an den Endbereichen (22) des Dachleistenprofils (21) für einen ästhetisch ansprechenden Übergang des Dachleistenprofils zum Fahrzeugdach (1) bzw. Dachkanal (2) ansetzbar sind oder einstückig mit den Befestigungselementen geformt sind.

## Claims

1. A roof load carrier system, comprising a roof strip profile (21) which is to be fastened to a vehicle roof (1) or a roof channel (2) of the vehicle roof (1) and which is a closed hollow profile, and a fastening element (30) which is adapted to the internal contour of the roof strip profile (21) and which is capable of being inserted into the end region (22) thereof and of being screwed to the vehicle roof (1), **characterized in that** the fastening element (30) is designed in the form of a two-armed clamp (30) engaging under a lower face (25) of the hollow profile (21) and with a threaded extruded hole (32) in the upper arm (31) and a bore (41) in the lower arm (33) for a fastening pin (36) capable of being screwed into the threaded extruded hole (32) and engaging through a bore (25a) in the lower face (25), and a depression (35) is formed in the region of the bore (41) in the lower arm (33) of the clamp (30) in order to receive a collar (38) of the fastening pin (36) and/or a seal (40) in a recessed manner.

2. A roof load carrier system according to Claim 1, **characterized in that** the roof strip profile (21) comprises an extruded profile with a cross-sectional contour which remains the same over the length thereof, wherein the end region (22) of the extruded profile is made bevelled at the bottom.

3. A roof load carrier system according to Claim 1 or 2, **characterized in that** the roof strip profile (21) has a more pronounced curvature in the longitudinal direction than the vehicle roof (1) or the roof channel (2) respectively, and is bevelled (23) in a manner adapted to the shape of the vehicle roof (1) or the roof channel (2) respectively.

4. A roof load carrier system according to Claim 2 or 3, **characterized in that** the fastening element (30) is introduced into the end region (22) and is connected to the vehicle roof (1) or the roof channel (2) respectively.

5. A roof load carrier system according to Claim 4, **characterized in that** the fastening element (30) is introduced into the end region (22) by insertion in the longitudinal direction of the profile.

6. A roof load carrier system according to any one of the preceding Claims, **characterized in that** in the state fastened to the vehicle roof (1) or the roof channel (2) respectively the roof strip profile (21) has ends which are made open as viewed in the longitudinal direction of the profile, and each open end is closed by a cap in the longitudinal direction of the profile.

7. A roof load carrier system according to Claim 1, **characterized in that** the lower face (25) is shortened in the longitudinal direction of the profile as compared with the upper face (24) directed towards the outside of the vehicle, and the clamp (30) is arranged around the shortened end of the lower face (25).

8. A roof load carrier system according to any one of Claims 1 to 7, **characterized in that** separate caps are capable of being attached to the end regions (22) of the roof strip profile (21) for an aesthetically attractive transition of the roof strip profile to the vehicle roof (1) or the roof channel (2) respectively or are formed in one piece with the fastening elements.

## Revendications

1. Système de support de charge de toit constitué d'un profilé de baguette de toit à fixer sur le toit d'un véhicule (1) ou sur un canal de toit (2) du toit de véhicule (1), qui est un profilé creux et fermé, et d'un élément de fixation (22) adapté au contour interne du profilé de baguette de toit (21), insérable au niveau de son extrémité (22) et vissable avec le toit de véhicule (1), **caractérisé en ce que** l'élément de fixation (30) est conçu comme une pince (30) à deux bras saisissant par en dessous une surface inférieure (25) du profilé creux (21), avec un passage fileté (32) dans le bras supérieur (31) et un alésage (41) dans le bras inférieur (33) pour une tige de fixation (36) vissable dans le passage fileté (32) et traversant un alésage (25a) dans la surface inférieure (25), et **en ce que**, dans le bras inférieur (33) de la pince (30) est réalisée une cavité (35) au niveau de l'alésage (41) pour le logement en affleurement d'un collet (36) et/ou d'un joint d'étanchéité (40).

2. Système de support de charge de toit selon la revendication 1, **caractérisé en ce que** le profilé de baguette de toit (21) est constitué d'un profilé filé avec un contour de section constant sur toute sa longueur, moyennant quoi l'extrémité (22) du profilé filé est chanfreinée dans sa partie inférieure.

3. Système de support de charge de toit selon la revendication 1 ou 2, **caractérisé en ce que** le profilé de baguette de toit (21) présente, dans la direction longitudinale, une courbure plus forte que le toit du véhicule (1) ou du canal de toit (2) et il est chanfreiné (23) au niveau de son extrémité (22) de manière adaptée au contour du toit du véhicule (1) ou du canal de toit (2).

4. Système de support de charge de toit selon la revendication 2 ou 3, **caractérisé en ce que**, au niveau de l'extrémité (22), l'élément de fixation (30) est inséré et relié avec le toit du véhicule (1) ou le canal de toit (2).

5. Système de support de charge de toit selon la revendication 4, **caractérisé en ce que** l'élément de fixation (30) est inséré par une poussée dans la direction longitudinale du profilé au niveau de son extrémité (22).

6. Système de support de charge de toit selon l'une des revendications précédentes, **caractérisé en ce que** le profilé de baguette de toit (21) présente, lorsqu'il est fixé sur le toit du véhicule (1) ou le canal de toit (2), des extrémités qui présentent une forme ouverte vues dans la direction longitudinale du profilé et **en ce que** chaque extrémité ouverte dans la direction longitudinale du profilé est obturée par un capuchon.

7. Système de support de charge de toit selon la revendication 1, **caractérisé en ce que** la surface inférieure (25) est raccourcie dans la direction longitudinale du profilé par rapport à la surface supérieure (24) dirigée vers l'extérieur du véhicule et **en ce que** la pince (30) est disposée autour de l'extrémité raccourcie de la surface inférieure (25).

8. Système de support de charge de toit selon l'une des revendications 1 à 7, **caractérisé en ce que** des capuchons séparés peuvent être posés au niveau des extrémités (22) du profilé de baguette de toit (21) pour une transition esthétique entre le profilé de baguette de toit et le toit du véhicule (1) ou le canal de toit (2) ou bien sont moulés d'une seule pièce avec les éléments de fixation.
